# EUROPEAN PATENT APPLICATION

(11) **EP 1 547 458 A1**
(43) Date of publication of application: **29.06.2005**
(21) Application number: 03740503.2
(22) Date of filing: 09.07.2003
(51) Int. Cl.: A01D 46/26

(54) **TORQUE-LIMITING DEVICE IN A MECHANISM USED TO TRANSFORM A ROTATIONAL MOVEMENT INTO A RECIPROCATING LINEAR MOVEMENT OR VICE VERSA**

(30) Priority: 09.07.2002 ES 200201771 U
(71) Applicant: Hispaes, S.A., 08182 Sant Feliu de Codines (ES)
(72) Inventor: GURRI MOLINS, José, E-08182 Sant Feliu de Codines (ES)
(74) Representative: Gislon, Gabriele
(86) International application number: PCT/ES2003/000345
(87) International publication number: WO 2004/004442

(57) **Abstract**

The mechanism is of the type that comprises a connecting rod (3) connected by its head (3a) to a crankpin (4) of a rotating crank, and by its base (3b) to a linearly guided mobile element (6). The device comprises a travelling end stop (10) joined to an articulation close to one end of the mobile element (6). The travelling end stop (10) moves with a rocking movement between two flat tracks (11) that face each other and which are parallel to the direction of movement of the travelling end stop (10). In the presence of torsional stresses applied to the mobile element (6), the travelling end stop (10) move in contact with one or the other of the said tracks (11) preventing or limiting torsion deformation of the connecting rod (3) and/or the mobile element (6) and the presence of strains in the mechanism.

## Description

### Field of the invention

This invention concerns a torque-limiting device in a mechanism used to transform a rotational movement into a reciprocating linear movement or vice versa.

The device of this invention is applicable to any machine that includes a mechanism used to transform a rotational movement into a reciprocating linear movement or vice versa in which the reciprocating linear movement element may be subject to torsion stresses in spite of being linearly guided, such as for example, a reciprocating saw. More specifically, the device of this invention is applicable in a portable mechanical harvester, in which the reciprocating linear movement element has a gripping device at its distal end that is used to grip a branch or secondary trunk of a tree or bush.

### Technical background

As an example of a portable mechanical harvester, the one described in patent WO 98/00190 of the same applicant may be cited, that comprises a motor which, by means of a centrifugal clutch and gearbox transmission, drives a crank connected by a rod to a linearly guided mobile element, to which is joined a shaft carrying a gripping member at its distal end that is used to grip a branch or secondary trunk of a tree or bush. The cited crank and rod mechanism operate as a vibration-producing mechanism that is able to convert the rotational movement of the crank into a vibratory reciprocating linear movement of the rod.

This apparatus includes a device that joins the rod to the mobile element that permits a rod to freely rotate with respect to the mobile element linked to the vibration-producing mechanism rod. This possibility of free rotation prevents any torsion moment produced on the said gripping member, for example, caused by operation with the tree's branches (returning in any direction), being transmitted to the rod via the mobile element, which could have harmful effects on the rod itself, the rod's crankpin, the mobile element, the articulated joint between the rod base and the mobile element etc. The operator controls the orientation of the gripping member by holding and rotating the rod or sleeve associated to the rod with one hand.

However, in certain applications, it may be convenient for the rotational capacity of the rod to be limited at the same time as limiting the transmission of torsion stresses; for example, in a lightweight, portable mechanical harvester, such as the one described in document ES-A-1049600, belonging to the same applicant. This harvester is of the type that comprises a relatively long tubular support that connects to a rotational force takeoff point, such as an internal combustion engine, with a vibration-producing mechanism, located away from the said power takeoff point or engine, and where the said vibration-producing mechanism is connected to a mobile element carrying the gripping element that only has the necessary length to permit the rocking vibratory movement. The cited tubular support contains a power shaft for the rotational movement from the power takeoff point or engine. In the vibration-producing mechanism, the cited power shaft drives a conical toothed pinion meshes with a conical gear wheel that rotates with respect to a transversal that arbour on the power shaft. A crankpin is eccentrically mounted on one of the faces of the said gear wheel opposite its gear face, to which a rod is connected by its head, the base of which is connected by a hinge pin to the end of the said mobile element, which is linearly guided by a guide fixed to a casing, chassis or box of the said vibration-producing mechanism. In this type of lightweight harvester, the operator holds the machine by means of one or more handles associated with the tubular support and maintains the vibration-producing mechanism, with the vibratory gripping member close to it, projecting upwards in order to reach the tree's branches, for which reason the actual device is of lightweight construction. In order for the operator to maintain full control over the direction of the gripping device by means of rotating the tubular support, the rotational capacity of the gripping device mobile element must be limited with respect to the vibration-producing mechanism.

In this sense, the fact of providing at least one flat face in this section of the mobile element that is linearly guided, with the said flat face cooperating with a complementary profile of the corresponding linear guide in a slipping relationship is known. Although this arrangement prevents the free rotation of the mobile element on its own torsion axis, without preventing its rocking vibratory movement, sealing becomes very difficult to achieve when the guide of this rocking movement communicates with the vibration-producing mechanism's oil sump.

Patent IT-A-1302317 describes a lightweight, portable mechanical harvester of the type described above, in which the mobile element has the form of a flat handrail that is guided by its narrow edges by means of ribbed edge wheels, together with felt pieces that are in contact with the wide faces that partially retain the sump oil. However, the sump is not perfectly leak-tight and the guidance of the mobile element is deficient.

### Brief description of the invention

One objective of this invention is to provide a torque-limiting device in a mechanism used to transform a rotational movement into a reciprocating linear movement or vice versa that provides torque limitation with a relatively large radius of limitation that results in a reduction of the force necessary to counteract the applied torsion stresses.

Another objective of this invention is to provide the means of reducing the friction between the rear end stop and its associated guide.

These objectives are obtained, in accordance with this invention, by providing a torque-limiting device in a mechanism used to transform a rotational movement into a reciprocating linear movement or vice versa, where the said mechanism is of the type comprising a rod, the head of which articulates with an eccentric crankpin on a rotating crank with respect to a shaft and by its base, by means of a hinge pin, to a linearly guided mobile element. The device is characterised because it comprises a travelling end stop joined to a hinge pin, or to an end of the mobile element close to it, said travelling end stop moving together with the mobile element describing a reciprocating linear movement produced by a crank and connecting rod mechanism. The cited travelling end stop is separated from the mobile element shaft and moves between two flat tracks that face each other and which are parallel to the direction of movement of the travelling end stop. Thus, in the presence of any torsion stresses applied to the mobile element, the travelling end stop moves in contact with one and/or the other of the said tracks, preventing or limiting the torsional deformation of the connecting rod and the presence of strains in the mechanism. This arrangement enables the guided portion of the mobile element to be cylindrical, which permits simple, economical leak-tightness by means of conventional commercially available oil seals.

Preferably, there should be a small amount of free play between the each of the said tracks and the travelling end stop so that in the absence of torsional stresses applied to the mobile element, there will be no contact between the travelling end stop and the tracks, while in the presence of such stresses, the slightest deformation of the connecting rod, the travelling end stop will come into contact with one or the other tracks thus limiting the deformation of the connecting rod and the presence of strains in the mechanism. This free play makes it possible to include a rolling element that can roll along one or the other tracks, such as for example, a needle bearing mounted on a journal that is an axial extension of the cited hinge pin that connects the connecting rod base to the said mobile element. The smaller the said free play between each of the tracks and the rolling element, the smaller will be the torsional deformation admitted by the connecting rod and/or the mobile element, so that the free play can be a minimum within certain variable values according to the technical requirements of each application. As an example only, the said free play in a harvester of the type described above may lie between 0.05 and 0.25 mm, which involves a minimum torque angle absorbed by the connecting rod and/or the mobile element without suffering any damage.

A relatively large end stop radius is provided with the device of this invention, which reduces the force applied by the end stop on the tracks and a rolling element that reduces the friction produced by the said force between the end stop and the tracks during the reciprocating vibratory linear movement.

### Brief description of the drawings

These and other advantages and characteristics can be better understood from the following detailed with reference to the included drawings, in which;
Fig. 1 is a partial view in a longitudinal section of a lightweight portable harvester in which the torque-limiting device of this invention is included;
Fig. 2 is a detailed enlargement of Fig. 1;
Fig. 3 is an upper plan view of the device shown in Fig. 1 with a cover removed and certain parts, such as the mobile element, are not included in order to better show the device of this invention;
Fig. 4 is a partial view of a transverse section taken along line IV-IV of Fig. 2, with certain parts, such as the mobile element and its guide not included in order to better show the device of this invention; and
Fig. 5 is a view of a transverse section taken along line V-V of Fig. 2.

### Detailed description of a construction example

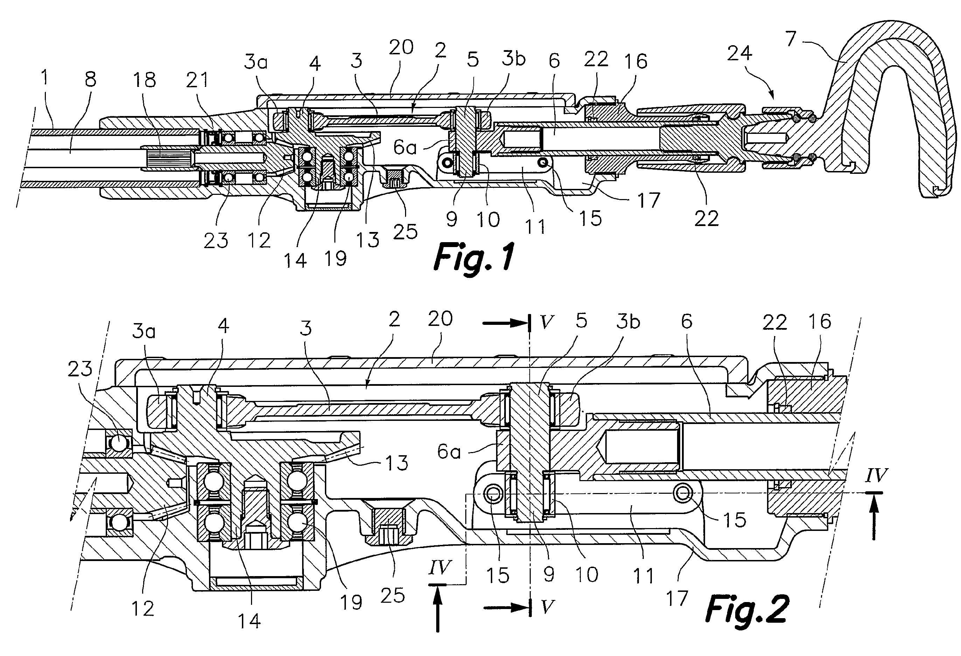

First referring to Fig. 1, which is a partial representation of a lightweight portable mechanical harvester similar to the one described in the cited document ES-A-1049600, of the same applicant. It must be pointed out, however, that although the device of this invention is very suitable for this type of apparatus, its application is not limited to the same and its description is only provided as an example.

The apparatus of Fig. 1 is of the type comprising a tubular support 1 containing a rotational movement power shaft 8 coupled by a first end to a rotational power takeoff point or engine (not shown) and by a second end to a vibration producing mechanism 2 that includes a connecting rod 3 that is connected by its head 3a to an eccentric crankpin 4 of a rotating crank and by its base 3b to the end of a mobile element 6 via a hinge pin 5, and which is linearly guided by a guide 16 fixed to a casing 17 of the said vibration-producing mechanism. The distal end of the cited mobile element 6 carries a gripping member 7, which is used to grip a branch or secondary trunk of a tree or bush in order to transmit the vibrating movement to it so that the existing fruit or berries are brought down. In the illustrated example, the joint between the said gripping member 7 and the mobile element 6 is produced by a joining device 24 that is described in the cited patent WO 98/00190, of the actual applicant. At the entry of the vibration-producing mechanism 2, the cited second end of the said power shaft 8 is connected by mains of a knurled coupling 18 to a conical toothed pinion 12, which meshes with a conical gear wheel 13 that rotates with respect to a shaft 14 that is transversal to the power shaft 8 and mounted by means of bearings 19, the shaft 14 of which forms part of the meshing face of the said conical gear wheel 13, while the cited crankpin 4 eccentrically forms part of a face of the same that is opposite the said meshing face. The cited pinion 12 is joined to a shaft mounted on the casing 17 by means of bearings 23. The mobile element 6 is connected to the connecting rod 3 on the same side as the crankpin 4. The casing 17 defines an oil sump for lubricating the vibration-producing mechanism and is closed off by cover 20 and an emptying cap 25. Conventional type oil seals 21 and 22 make the said sump leak-tight with respect to the pinion 12, with rotational movement, and with respect to mobile element 6, with vibratory rocking movement respectively.

The torque limiting device of this invention comprises a travelling end stop 10 that in the illustrated example is joined to the cited hinge pin 5, although it could also be equally fixed, for example, to one end of the mobile element 6, close to pin 5. Because of the action of guide 16, the travelling end stop 10 moves joined to the mobile element 6 according to a reciprocating linear movement. The mentioned movement of the travelling end stop 10 takes place between two flat tracks 11, which face each other and are parallel to the direction of movement of the said travelling end stop 10, so that in the presence of torsion stresses applied to the mobile element 6, the travelling end stop 10 moves in contact with one and/or the other of the said tracks 11 preventing or limiting the torsional deformation of the connecting rod 3 and the presence of strains in the mechanism. This arrangement enables the guided portion of the mobile element 6 to have a circular transverse section, which will facilitate the use of the cited conventional oil seals 22.

In the illustrated example, the said travelling end stop comprises a rolling element 10 that can roll along one or the other tracks 11. Specifically, the said rolling element comprises a needle bearing mounted rotating coaxially on a journal 9, forming an axial extension of the cited hinge pin 5, which connects the cited connecting rod base 3 to the said mobile element 6. However, the travelling end stop does not have to include a rolling element, and may equally include, for example, a pair of sliding skids or a travelling die.

Preferably and out of necessity when the rolling element 10 is included, a small amount of free play is left between the said rolling element 10 and each of the tracks 11. In this way, in the absence of torsional stresses applied to the mobile element 6, the rolling element 10 is able to move with the cited vibratory movement without any contact between the rolling element 10 and the tracks 11, while in the presence of such stresses, a slight torsion deformation of the connecting rod 3 and/or the mobile element 6 will cause the rolling element 10 to come into contact with one or the other tracks 11, thus preventing or limiting the cited torsion deformation of the connecting rod 3 and the presence of strains in the mechanism.

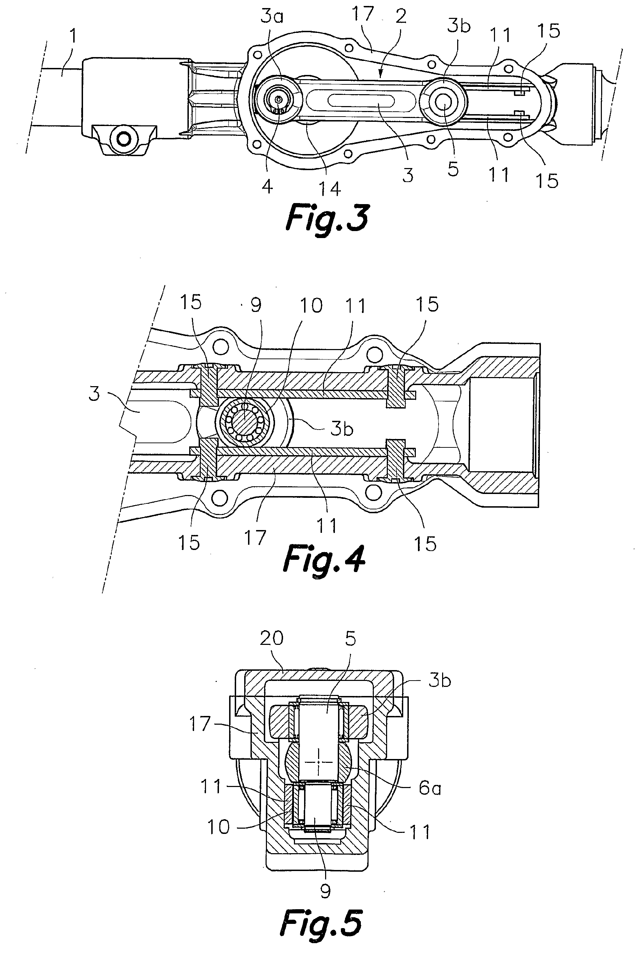

The mentioned tracks 11 must have sufficient hardness, a smooth surface finish and precise positioning. Conditions permitting, the tracks 11 can form part of the said casing 17, for example, machined into this part, or incorporated as inclusion parts during the casing 17 production moulding operation, although it would be an advantage, just as shown in Figs. 4 and 5, the said tracks 11 comprise two strips of material having the necessary hardness, duly machined separately and subsequently fixed to the casing 17 by suitable means, such as an adhesive, welding or, preferably mechanically, such as by rivets 15 at the ends.

As will be evident from the preceding description, with the device of this invention, the distance or end stop radius, from the torsion shaft of the mobile element 6 up to the line of contact (of the rolling or travelling element) of the travelling end stop 10 along the tracks 11 is relatively long, which reduces the force applied by the travelling end stop 10 to the tracks 11. In addition, the inclusion of the rolling element 10 reduces the friction produced by the said force between the end stop and the tracks 11 during the vibratory reciprocating linear movement.

An expert in the material would be able to easily introduce variations in the torque-limiting device described above, or in its application, without leaving the scope of the invention, which is defined by the attached claims.

## Claims

1. A torque-limiting device in a mechanism used to transform a rotational movement into a reciprocating linear movement or vice versa, with the said mechanism comprising a connecting rod (3), which articulates by its head (3a) to an eccentric crankpin (4) of a rotating crank with respect to a shaft (14) and by its base (3b), by means of an articulation to a mobile element (6), which is linearly guided, **characterised** because it comprises a travelling end stop (10) joined to the cited articulation, or to one end of the mobile element (6) close to the same, with the said travelling end stop (10) moving with a reciprocating linear movement between two flat tracks (11), which face each other and are parallel to the direction of travel of the said travelling end stop (10), so that the presence of torsion stresses applied to the mobile element (6), the travelling end stop (10) will come into contact with one or the other tracks (11), thus preventing or limiting the cited torsion deformation of the connecting rod (3) and/or the mobile element (6) and the presence of strains in the mechanism.

2. A device, in accordance with claim 1, **characterised** because there is a slight free play between each of the tracks (11) and the travelling end stop (10), so that in the absence of torsional stresses applied to the mobile element (6), the travelling end stop (10) will move without any contact with the tracks (11), while in the presence of such torsion stresses, the travelling end stop (10) will come into contact with one or the other tracks (11) thus limiting the torsion deformation of the connecting rod (3) and/or mobile element (6) and the presence of strains in the mechanism.

3. A device, in accordance with claim 2, **characterised** because the said travelling end stop comprises a rolling element (10) that can roll along one or the other tracks (11).

4. A device, in accordance with claim 3, **characterised** because it comprises a hinge pin (5) that connects the cited connecting rod (3) base (3b) to one end (6a) of the said mobile element (6) and which is axially extended to form a journal (9), coaxial, on which is mounted the said rolling element (10) in a rotating fashion.

5. A device, in accordance with claim 4, **characterised** because the said rolling element (10) comprises a needle bearing.

6. A device, in accordance with claim 1, **characterised** because at least this section of the mobile element (6) is cylindrical and on which at least one oil seal (22) is seated, housed in a linear guide (16) and joined to a casing (17), which defines an oil sump, which contains at least part of the mechanism that transforms the rotational movement into a linear reciprocating movement or vice versa.

7. A device, in accordance with claim 1, **characterised** because the said tracks (11) form part of or are included in a casing, chassis or sump (17), which houses the said mechanism that transforms the rotational movement into a linear reciprocating movement or vice versa.

8. A device, in accordance with claim 1, **characterised** because the said tracks (11) comprise two strips of material with adequate hardness, fixed in place by suitable means inside a casing, chassis or sump (17), which houses the said mechanism that transforms the rotational movement into a linear reciprocating movement or vice versa.

9. A device, in accordance with claim 1, **characterised** because the said mechanism that transforms the rotational movement into a linear reciprocating movement or vice versa, is a vibration-producing mechanism (2) for a portable mechanical harvester, in which the linearly guided mobile element (6) carries, at the distal end of the said mechanism (2), a gripping member (7) that can be applied to a branch or secondary trunk of a tree or bush.

10. A device, in accordance with claim 9, **characterised** because the said vibration-producing mechanism (2) comprises a conical toothed pinion (12), fixed to a rotating power transmission shaft (8), the pinion of which (12) meshes with a conical gear wheel (13) that rotates with respect to a shaft (14) that is transversal to the power shaft (8), with the said crankpin (4) eccentrically mounted on one face of the said gear wheel (13) opposite its meshing face, and with the said mobile element (6) connected to the connecting rod (3) by means of a hinge pin (5) which is axially extended to form a journal (9) bearing a rolling element (10), in function of the said travelling end stop, which moves between the said tracks (11).
